# EUROPEAN PATENT SPECIFICATION

(11) **EP 4 413 652 B1**
(45) Date of publication and mention of the grant of the patent: **21.10.2026**
(21) Application number: 21805896.4
(22) Date of filing: 02.11.2021
(51) Int. Cl.: H02M 7/219, H02M 3/158, H02M 1/00, H02M 7/5395, H02M 7/81, H02M 7/23

(54) **APPARATUS AND METHOD FOR BI-DIRECTIONAL AC/DC POWER CONVERSION**
VORRICHTUNG UND VERFAHREN ZUR BIDIREKTIONALEN AC/DC-STROMWANDLUNG
APPAREIL ET PROCÉDÉ DE CONVERSION DE PUISSANCE CA/CC BIDIRECTIONNELLE

(43) Date of publication of application: 14.08.2024
(73) Proprietor: Huawei Digital Power Technologies Co., Ltd., Shenzhen, Guangdong 518043 (CN)
(72) Inventor: MUHAMMAD, Yaqoob, 16440 Kista (SE); ANDERSSON, Mattias, 16440 Kista (SE); WANG, Shuqin, 16440 Kista (SE); TORRICO-BASCOPÉ, Grover Victor, 16440 Kista (SE)
(74) Representative: Gill Jennings & Every LLP
(86) International application number: PCT/EP2021/080331
(87) International publication number: WO 2023/078524

(56) References cited:
- CN-A- 112 564 475
- CN-B- 103 490 651
- CN-B- 106 487 207
- US-A1- 2015 236 617
- US-A1- 2021 226 528

## Description

### TECHNICAL FIELD

The aspects of the disclosed embodiments relate generally to power conversion apparatus and more particularly to control methodologies for bi-directional AC-DC power converters.

### BACKGROUND

There is a growing need for AC-DC power conversion. For example, AC to DC power converters, referred to as rectifiers, are used for powering telecom equipment, and DC to AC power converters, referred to as inverters, are useful in photovoltaic (PV) applications. A typical AC-DC power conversion stage employs two switching networks and an impedance network to transfer power between a high voltage AC power and a low voltage DC power. Appropriately operating the switching networks produces bi-directional power flow between the AC power and the DC power.

Operating the switching networks to achieve zero voltage switching (ZVS) while also providing bi-directional power flow in a high power-density converter topologies presents difficult control problems. Certain conventional approaches introduce an additional inductor, or an inductor and capacitor, to achieve ZVS operation. These additional components reduce power density and overall efficiency and do not provide good bi-directional control. Other conventional approaches employ an inductor current sensor leading to complex control requirements and increased cost. Model based control solutions have difficulty providing bi-directional power flow capability and difficulty achieving ZVS over wide input and output voltage ranges.

Thus, there is a need for improved AC-DC power converters with improved control methods that can achieve optimal, efficient, and cost-effective bi-directional power flow. Accordingly, it would be desirable to provide an apparatus that addresses at least some of the problems described above.
US 2015/236617 A1 discloses a ZVS voltage source inverter with reduced current ripple.
US 2021/0226528 A1 discloses multi-phase interleaved PFC converters with improved current balancing.
CN 112 564 475 A discloses a DCM control method for single-phase interleaved totem-pole PFC circuits.
CN 103 490 651 B discloses a full-bridge inverter UPWM control method to eliminate zero-crossing oscillation.

CN106487207 discloses a PFC converter wherein zero voltage opening of a high frequency bridge arm switch is realized.

### SUMMARY

The aspects of the disclosed embodiments are directed to a bi-directional AC/DC power conversion apparatus incorporating a control scheme configured to adjust the converter's switching frequency to achieve ZVS operation while maintaining minimum root-mean-square (RMS) current. The aspects of the disclosed embodiments achieve optimal and efficient performance using a simplified control scheme, with a reduced component count, bi-directional power flow capability, ZVS switching under a wide range of input and output voltage variations, and minimum RMS current. The invention is set out in the appended set of claims.

According to a first aspect, the above and further objectives and advantages are obtained by an apparatus. In one embodiment, the apparatus includes a bi-directional AC/DC power conversion topology having a low frequency switching network, a high frequency switching network, and one or more inductors, where the high frequency switching network includes a plurality of high frequency switching devices. The power conversion topology is configured to transfer power between a DC voltage and an AC voltage. The apparatus includes a controller coupled to the power conversion topology and configured to receive the DC voltage, the AC voltage, and a total current flowing through the one or more inductors, and to produce high frequency switch control signals configured to operate the high frequency switching devices. The controller is configured to generate a duty cycle based on a reference signal and a controlled signal; determine a switching frequency based on the total current, the duty cycle, and one or more of the DC voltage and the AC voltage; and generate the high frequency switch control signals based on the switching frequency and the duty cycle. Optimal and efficient performance is achieved using a simplified control scheme, with a reduced component count, bi-directional power flow capability, ZVS switching under a wide range of input and output voltage variations, and minimum RMS current.

In a possible implementation form, when the apparatus is operating as a rectifier, the switching frequency is determined based on the DC voltage, and when the apparatus is operating as an inverter, the switching frequency is determined based on the DC voltage and the AC voltage. ZVS operation relies on different sensory inputs for inverter and rectifier operation.

The switching frequency is configured to create an available charge provided by an inductor during a dead time equal to a stored charge in an output capacitance of the high frequency switching devices. Setting the available charge equal to the stored charge ensures ZVS operation of the switching devices.

In a possible implementation form, the switching frequency is limited to a predetermined maximum frequency. Limiting the switching frequency prevents the switching devices from being driven beyond their reliable operating range thereby improving reliability of the apparatus.

In a possible implementation form, the power conversion topology includes one or more phases. Use of multiple phases reduces ripple in the AC output voltage.

In a possible implementation form, the controller is configured to determine an average current by applying a low pass filter to the total current and determine the switching frequency based on the average current. Use of an average current provides a more stable controller operation, and averaging is easily implemented with a low pass filter.

In a possible implementation form, when the apparatus is operating as an inverter, the reference signal includes an AC reference voltage, the controlled signal includes the AC voltage, and the controller is configured to determine a first error signal by subtracting the AC voltage from the AC reference voltage and generate the duty cycle by applying a first control algorithm to the first error signal. With this loop compensation inverter operation can be controlled by a single and easily implemented loop control scheme.

In a possible implementation form, the first control algorithm includes a proportional plus integral (PI) control algorithm. A proportional plus integral control algorithm is well understood and easily designed and implemented.

In a possible implementation form, when the apparatus is operating as an inverter, the reference signal includes an AC reference current, and the controlled signal includes an AC current corresponding to the AC voltage. The controller is configured to determine the first error signal by subtracting the AC current from the AC reference current, and generate the duty cycle by applying the first control algorithm to the first error signal. Use of a current control loop provides a stable and predictable output current.

In a possible implementation form, when the apparatus is operating as an inverter, the reference signal includes the AC reference voltage, and the controlled signal includes the AC voltage. The controller is configured to determine the first error signal by subtracting the AC voltage from the AC reference voltage; generate a second reference signal by applying a voltage loop control algorithm to the first error signal; determine a second error signal by subtracting the AC current from the first error signal; and generate the duty cycle by applying a current loop control algorithm to the second error signal. Use of dual control loops provides control of both the current and voltage of the AC output voltage.

In a possible implementation form, when the apparatus is operating as a rectifier, the reference signal includes a DC reference voltage, and the controlled signal comprises the DC voltage. The controller is configured to: determine a DC voltage error signal by subtracting the DC voltage from the DC reference voltage; generate a voltage control signal by applying a DC voltage loop control algorithm to the voltage error signal; generate an AC current reference signal by multiplying the voltage control signal by an absolute value of the AC voltage; determine an AC current error signal by subtracting an absolute value of the AC current from the AC current reference signal; and generate the duty cycle by applying an AC current loop control algorithm to the AC current error signal. This dual control loop scheme allows rectifier operation to be controlled by a simple and easily implemented control scheme without any changes to the power converter topology.

According to a second aspect, the above and further advantages are obtained by a method for operating a bi-directional AC/DC power conversion topology. In one embodiment the AC/DC power conversion topology includes a low frequency switching network, a high frequency switching network, and one or more inductors, wherein the high frequency switching network includes a plurality of high frequency switching devices, and the power conversion topology is configured to transfer power between a DC voltage and an AC voltage. The method includes generating a duty cycle based on a reference signal and a controlled signal; determining a switching frequency based on a total current flowing through the one or more inductors, the duty cycle, and one of the DC voltage and the AC voltage; and generating high frequency switch control signals based on the switching frequency and the duty cycle. Optimal and efficient performance is achieved using a simplified control scheme, with a reduced component count, bi-directional power flow capability, ZVS switching under a wide range of input and output voltage variations, and minimum RMS current.

In a possible implementation form, determining the switching frequency includes configuring the switching frequency to create an available charge provided by an inductor during a dead time equal to the stored charge in an output capacitance of the high frequency switching devices. Setting the available charge equal to the stored charge ensures ZVS operation of the switching devices.

In a possible implementation form, when the power conversion topology is operating as an inverter, generating the duty cycle includes: determining a first error signal by subtracting the AC voltage from an AC reference voltage; and generating the duty cycle by applying a first control algorithm to the first error signal. Inverter operation can be controlled by a simple easily implemented single loop control scheme.

In a possible implementation form, when the power conversion topology is operating as a rectifier, generating the duty cycle includes determining a DC voltage error signal by subtracting the DC voltage from the DC reference voltage; generating a voltage control signal by applying a DC voltage loop control algorithm to the voltage error signal; generating an AC current reference signal by multiplying the voltage control signal by an absolute value of the AC voltage; determining an AC current error signal by subtracting an absolute value of the AC current from the AC current reference signal; and generating the duty cycle by applying an AC current loop control algorithm to the AC current error signal. This dual control loop scheme allows rectifier operation to be controlled by a simple and easily implemented control scheme without any changes to the power converter topology.

These and other aspects, implementation forms, and advantages of the exemplary embodiments will become apparent from the embodiments described herein considered in conjunction with the accompanying drawings. It is to be understood, however, that the description and drawings are designed solely for purposes of illustration and not as a definition of the limits of the disclosed invention, for which reference should be made to the appended claims. Additional aspects and advantages of the invention will be set forth in the description that follows, and in part will be obvious from the description, or may be learned by practice of the invention. Moreover, the aspects and advantages of the invention may be realized and obtained by means of the instrumentalities and combinations particularly pointed out in the appended claims.

### BRIEF DESCRIPTION OF THE DRAWINGS

In the following detailed portion of the present disclosure, the invention will be explained in more detail with reference to the example embodiments shown in the drawings, in which like references indicate like elements and:
Figure 1 illustrates a schematic block diagram of an exemplary bi-directional AC/DC power conversion apparatus incorporating aspects of the disclosed embodiments.
Figure 2 illustrates exemplary graphs showing primary waveforms during inverter operation of a high frequency switching network incorporating aspects of the disclosed embodiments.
Figure 3 illustrates a schematic block diagram of an exemplary control scheme for operating a bi-directional AC/DC conversion topology incorporating aspects of the disclosed embodiments.
Figure 4 illustrates a schematic block diagram of a dual control loop control scheme for controlling inverter operation of a bi-directional AC/DC conversion topology incorporating aspects of the disclosed embodiments.
Figure 5 illustrates exemplary graphs showing primary waveforms during rectifier operation of a high frequency switching network incorporating aspects of the disclosed embodiments.
Figure 6 illustrates a schematic block diagram of an exemplary control scheme configured for rectifier operation of a bi-directional AC/DC conversion topology incorporating aspects of the disclosed embodiments.
Figure 7 illustrates a flow chart of an exemplary method for controlling a bi-directional AC/DC conversion topology incorporating aspects of the disclosed embodiments.
Figure 8 illustrates a flow chart of an exemplary method for generating a duty cycle during inverter operation of a power conversion topology incorporating aspects of the disclosed embodiments.
Figure 9 illustrates a flow chart of an exemplary method for generating a duty cycle during rectifier operation of a power conversion topology incorporating aspects of the disclosed embodiments.

### DETAILED DESCRIPTION OF THE DISCLOSED EMBODIMENTS

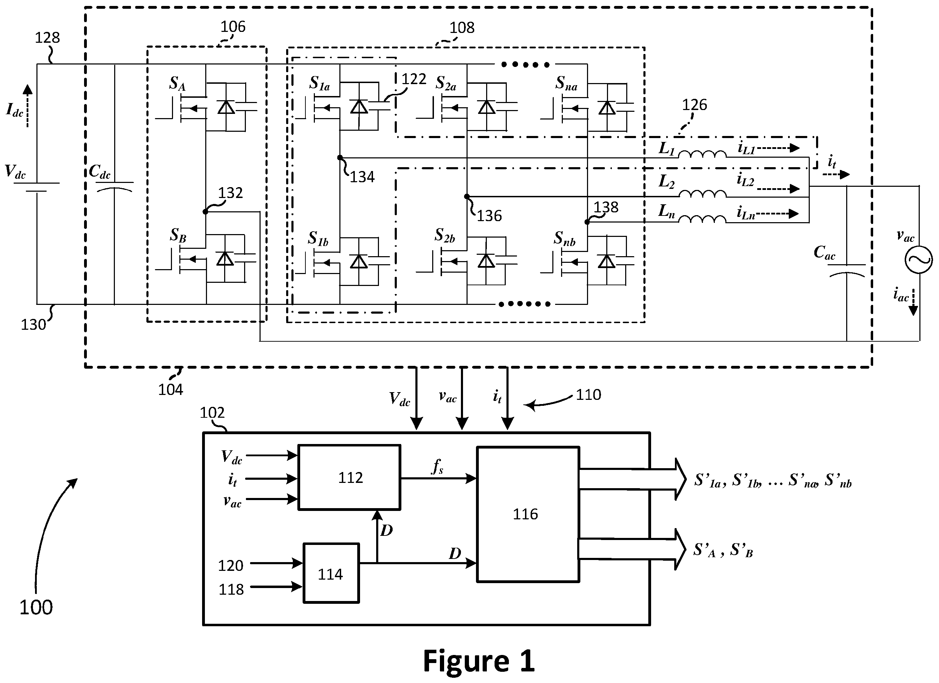

Referring to Figure 1, a diagram of an exemplary bi-directional AC/DC power conversion apparatus 100 is illustrated. The apparatus 100 of the disclosed embodiments is directed to an improved bi-directional AC/DC power conversion apparatus 100 incorporating an improved controller 102 configured to efficiently operate an AC/DC power conversion topology 104. The apparatus 100 is appropriate for applications such as converting grid power to conditioned DC power as is done when powering telecom equipment, or for converting DC power to AC power such as for use in photovoltaic systems.

As is shown in the example of Figure 1, the apparatus 100 includes a bi-directional AC/DC power conversion topology 104 comprising a low frequency switching network 106, a high frequency switching network 108, and one or more inductors ***L₁, L₂, ... Lₙ.*** The high frequency switching network 108 includes a plurality of high frequency switching devices ***S₁ₐ, S_{1b}, ... Sₙₐ*, *S_{nb}*.** The power conversion topology 104 is configured to transfer power between a DC voltage **(*V_{dc}*)** and an AC voltage **(*v_{ac}*)*.***

A controller 102 is coupled to the power conversion topology 104 and is configured to receive the DC voltage **(*V_{dc}*),** the AC voltage **(*v_{ac}*)*,*** and a total current **(*iₜ*)** flowing through the one or more inductors ***L₁, L₂*, *... Lₙ*.** The controller 102 produces the high frequency switch control signals ***S'₁ₐ, S'_{1b}*, ... *S'ₙₐ*, *S'_{nb}*** configured to operate the high frequency switching devices ***S₁ₐ, S_{1b}, ... Sₙₐ*, *S_{nb}*.**

In one embodiment, the controller 102 is configured to generate a duty cycle (D) based on a reference signal 120 and a controlled signal 118. The controller 102 is also configured to determine a switching frequency **(*fₛ*)** based on the total current **(*iₜ*)*,*** the duty cycle ***(D),*** and one or more of the DC voltage **(*V_{dc}*)** and the AC voltage **(*v_{ac}*);** and generate 116 the high frequency switch control signals ***S'₁ₐ*, *S'_{1b}*, *... S'ₙₐ*, *S'_{nb}*** based on the switching frequency **(*fₛ*)** and the duty cycle ***(D).***

Power flow in the apparatus 100 is provided by the bi-directional AC/DC power conversion topology 104. The bi-directional AC/DC power conversion topology 104 is configured to provide a low component count and efficient power handling capabilities. The conversion topology 104 employs a low frequency switching network 106 coupled in parallel with the DC power ***V_{dc},*** also referred to herein as the DC voltage ***V_{dc}.*** The low frequency switching network 106 includes two switching devices ***S_{A}, S_{B}*,** coupled in series between a positive DC bus 128 and a negative DC bus 130 and forming a central node 132. The low frequency switching network 106 typically operates at a frequency corresponding to the AC voltage ***v_{ac}*** and supports conversion between AC and DC power.

Magnetic components in the power conversion topology 104 are provided by inductors ***L₁, L₂*, ... *Lₙ*** coupled between the AC voltage *v_{ac}* and each phase 126 of the high frequency switching network 108. A capacitor ***C_{ac}*,** coupled in parallel with the AC voltage ***v_{ac}*,** acts as an output capacitor when the apparatus 100 is operating as an inverter. A high frequency switching network 108 includes one or more pairs of switching devices ***S₁ₐ*, *S_{1b}*, *... Sₙₐ*, *S_{nb}*** where each pair, such as the first pair ***S₁ₐ*, *S_{1b}*,** is coupled in series between the positive DC bus 128 and the negative DC bus 130 and forms a central node, such as central node 134. Each central node 134, 136, 138 is coupled between a different one of the inductors ***L₁, L₂*, *... Lₙ*.** and the AC voltage ***v_{ac}*.** In this fashion each pair of switching devices ***S₁ₐ*,** *S_{1b}* with its corresponding inductor ***L₁*** forms a phase 126.

In the embodiment illustrated in Figure 1, the power conversion topology 104 is shown as having three phases, however any number of phases may be advantageously employed such as one phase, two phases, ten phases, or twenty phases where the number of phases is a matter of design choice. Use of greater number of phases can aid in reducing ripple currents in the AC voltage *v_{ac}*.

As used herein the term "switching network" refers to a circuit having one or more pairs of switching devices, where each pair of switching devices is coupled in series between a positive DC rail and a negative DC rail. For example, the low frequency network 104 has one pair of switching devices ***S_{A}, S_{B}*** coupled in series between the positive DC rail 128 and the negative DC rail 130 forming a central node 132. The exemplary high frequency switching network 108 is shown with at least three pairs of switching devices, namely a first pair ***S_{1a &} S_{1b}*,** a second pair ***S_{2a &} S_{2b}*,** and an n^{th} pair ***Sₙₐ*, *S_{nb.}*** Note that while the high frequency switching network 108 is illustrated with three pairs of switching devices ***S₁ₐ, S_{1b}, S₁ₐ, S_{1b}, Sₙₐ, S_{nb}*,** a switching network may include any desired number of pairs of switching devices, such as one, two, three, ten, or twenty.

In one embodiment the switching devices ***S_{A}, S_{B}, S₁ₐ*, *S_{1b}*, *... Sₙₐ*, *S_{nb}*** are semiconductor switching devices, such as metal oxide semiconductor field effect transistors (MOSFETs). However, any appropriate type of switching device configured to efficiently control current flow at the desired switching frequencies may be advantageously employed without straying from the scope of the present disclosure. As used herein a switch or switching device is referred to as on or turned on when it is conducting current and a switch or switching device is referred to as off or turned off when it is not conducting current.

As used herein the term bi-directional AC/DC power conversion topology refers to the bi-directional AC/DC power conversion topology 104 described above and illustrated in Figure 1. As used herein the term "inverter" refers to a power conversion apparatus configured to receive DC power and produce AC power, and the term "rectifier" refers to a power conversion apparatus configured to receive AC power and produce DC power. The apparatus 100 is configured to be bi-directional which means it can operate as either an inverter or a rectifier.

When desired, a DC link capacitor ***C_{dc}*** may be coupled in parallel with the DC voltage ***V_{dc}*** to provide a more stable DC voltage for the converter. For example, when operating as an inverter, a DC link capacitor ***C_{dc}*** may be employed to remove ripple from the DC input voltage which may have been created by a prior power conversion stage.

The controller 102 is coupled to the bi-directional AC/DC power conversion topology 104 and configured to operate the switching devices ***S_{A}, S_{B}, S₁ₐ, S_{1b}, ... Sₙₐ, S_{nb}*** to the facilitate power flow through the power conversion topology 104. Bi-directional power transfer between the DC voltage ***V_{dc}*** and the AC voltage ***v_{ac}*** is managed by the controller 102. The AC and DC ***v_{ac}, V_{dc}*** voltages coupled to the converter are received by the controller 102 along with the total current *iₜ* flowing through the inductors.

The controller 102 is configured to receive signals 110 from the power conversion topology 104. The received signals 110 allow the controller 102 to monitor behaviour of the power conversion topology 104 and include the DC voltage ***V_{dc}*,** the AC voltage ***v_{ac}*,** and a total current *iₜ* flowing through the one or more inductors ***L₁, L₂,*** ... ***Lₙ*.** The total current *iₜ* is the sum of all currents flowing through each individual inductor *i_{L1}*, *i_{L2}*,...*i_{Ln}*.

Operation of the switching networks 106, 108 is accomplished by switch control signals ***S'_{A}*, *S'_{B}*, *S'₁ₐ, S'_{1b}*, ... *S'ₙₐ*, *S'_{nb}*** generated by the controller 102, where each switch control signal ***S'_{A}, S'_{B}*, *S'₁ₐ*, *S'_{1b}*, *... S'ₙₐ*, *S'_{nb}*** is configured to operate a respective one of the switching devices ***S_{A}, S_{B}, S₁ₐ*, *S_{1b}*, *... Sₙₐ*, *S_{nb}*.** In certain embodiments it may be beneficial to employ gate drivers between the controller 102 and the switching networks 106, 108 to amplify and isolate the switch control signals ***S'_{A}, S's, S'₁ₐ*, *S'_{1b}*, *... S'ₙₐ*, *S'_{nb}*.**

Generally, controllers for an AC/DC power conversion stage should achieve optimal and efficient performance while satisfying several important criteria. A controller should operate with a reduced number of power handling components. For example, no additional capacitors or inductors should be required to monitor currents or to achieve zero voltage switching (ZVS) operation. A controller should provide bi-directional power flow capability, allowing the power conversion topology 104 to be operated as either a rectifier or an inverter. For reliability and efficiency, the controller should maintain ZVS operation throughout a wide range of input and output voltage variations. Beneficially, the above criteria should be achieved using a simple and easy to implement control scheme.

A reference signal 120 is used by the controller 102 as a target value for a desired system output referred to herein as the controlled signal 118. When operating as an inverter, the system output is the AC voltage ***v_{ac}*,** and the controlled signal 118 is a signal corresponding to the AC voltage *v_{ac}.* Similarly, when operating as a rectifier, the system output is the DC voltage ***V_{dc}*,** and the controlled signal 118 is a signal corresponding to the DC voltage ***V_{dc}*.**

The controller is configured to generate 114 a duty cycle D based on the controlled signal 118 and the reference signal 120. As will be discussed further below, in the illustrated embodiment the controller 102 generates 114 the duty cycle ***D*** by comparing the controlled signal 118 with the reference signal 120 to determine an error signal and applying a control algorithm to generate the duty cycle ***D*.**

A switching frequency ***fₛ*** is determined 112 by the controller 102 based on the generated duty cycle ***D,*** the total current ***iₜ*,** and one or more of the DC voltage ***V_{dc}*,** and the AC voltage ***v_{ac}*.** Control signals ***S*'*₁ₐ*, *S'_{1b}*, *... S'ₙₐ*, *S'_{nb}*** are generated 116 based on the duty cycle ***D*** and the switching frequency ***fₛ*,** where the frequency ***fₛ*** is configured to ensure ZVS operation of the switching devices in the high frequency switching network 108.

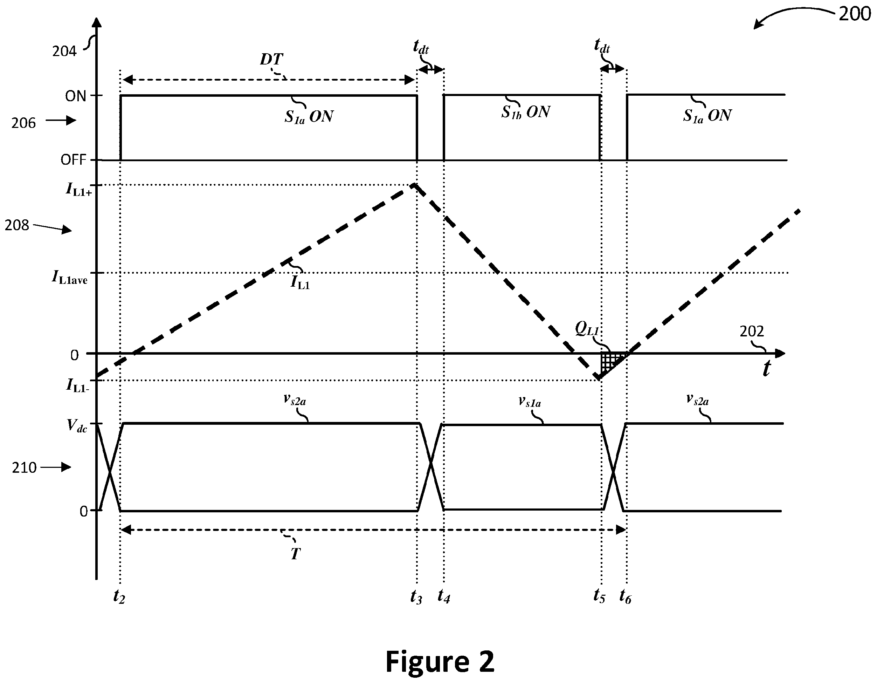

Figure 2 illustrates graphs 200 showing primary waveforms for the first phase 126 of the high frequency switching network 108 while the exemplary apparatus 100 is operating as an inverter. In the graphs 200, time is depicted along the horizontal axis 202 increasing to the right and signal magnitude is depicted along the vertical axis 204 increasing upwards. The graphs 200 depict operation of the high frequency switches ***S₁ₐ*, *S_{1b}*** during a positive portion of the AC voltage *v_{ac}* cycle. During the positive portion of the AC voltage ***v_{ac}*** cycle switching device ***S_{A}*** of the low frequency switching network 106 is turned off and switching device ***S_{B}*** of the low frequency switching network is turned on, and the reference voltage 120 will be positive. The primary waveforms for the first phase 126 are periodic with a single period ***T*** marked below graph 210 for reference. The period ***T*** equals an inverse of the switching frequency ***T* = *1*/ *fₛ*.** The duty cycle corresponds to an amount of time the first switching device ***S₁ₐ*** remains on during a period and is shown as an interval ***DT*** above graph 206. Dead time is an interval during which both switching devices ***S₁ₐ*** and ***S_{1b}*** are turned off and is indicated by intervals ***t_{dt}*** in the graphs 200.

Graph 206 illustrates the control signals for switching device ***S₁ₐ*** and switching device ***S_{1b}.*** The first switching device ***S₁ₐ*** is on during the periods indicated by ***S**_{**1a** ON}*, and the second switching device ***S_{1b}*** is on during the period ***T*** indicated by ***S**_{**1b** ON}*.

Graph 208 illustrates current ***I*_{L1}** through the first inductor ***L₁*.** The maximum inductor current is indicated as ***I*_{L1+},** the minimum inductor current is indicated as ***I*_{L1-},** and the average inductor current is indicated as ***I*_{L1ave}.**

Graph 210 illustrates voltage across the first switching device ***vₛ₁ₐ*** and the second switching device ***vₛ₂ₐ*.** The voltages across the two switching devices transition from zero (0) to the DC voltage ***V_{dc}*** during the dead time ***t_{dt}*.** For example, the second switching device ***S_{1b}*** is turned off at time ***t₅*** and the voltage across the second switching device *vₛ₂ₐ* transitions to zero during the dead time ***t_{dt}*** between time ***t₅*** and ***t₆*.**

An important consideration for reliable and efficient operation of the apparatus 100 is to maintain ZVS operation of the switching devices ***S₁ₐ*, *S_{1b},* ... *Sₙₐ*, *S_{nb}*** in the high frequency switching network 108. The graphs 200 illustrate converter 100 operation during the desired ZVS operation. In order to achieve ZVS operation, the charge ***Q_{L1}*** stored on an output capacitance *C*ₒₛₛ off one switching devices, such as switching device ***S_{1b}*,** must be removed prior to turning on the next switching device, such as switching device ***S₁ₐ*.** This transition is illustrated as time interval ***t₅ - t₆*** in the graphs 200.

During the positive AC cycle, as depicted in the graphs 200, the switching device ***S_{1b}*** naturally achieves ZVS operation due to the higher value of inductor current ***I*_{L1+}** at its turn on instant ***t₄.*** However, for the other switching device ***S₁ₐ*** the lower value of inductor current ***I*_{L1-}** available at the switching instant *t₅* may not be sufficient to guarantee ZVS operation and may require a change in frequency to achieve ZVS operation.

The stored charge ***Q_{ZVS1}*** that needs to be removed across the switching device ***S₁ₐ*** and added to the switching device ***S_{1b}*** to achieve ZVS operation can be calculated as shown in equation (1): ${Q}_{ZVS 1} = 2 {C}_{oss} {V}_{dc}$ (1) where *C*_{OSS} is the output capacitance of a switching device, such as switching device ***S₁ₐ*.** The output capacitance *C*_{OSS} can typically be obtained from data sheets of the switching devices being used. The available negative charge ***Q_{L1}*** stored in the inductor ***L₁*** is given by equation (2): ${Q}_{L 1} = \frac{- {t}_{dt} {I}_{L 1 -}}{2}$ (2) where *t_{dt}* is the dead-time between turn off of the switching device ***S_{1b}*** and the turn on of the switching device ***S₁ₐ*,** and ***I*_{L1-}** is the inductor ***L₁*** current at the time at or just before the turn on instant of ***S₁ₐ*.** The value of ***I*_{L1-}** is given by equation (3): ${I}_{L 1 -} = \frac{\left|{i}_{tavg}\right|}{n} - \frac{\left(1-D\right) \left|{v}_{ac}\right|}{2 {L}_{1} {f}_{s}}$ (3) where *i_{tavg}* is the average total current through all the inductors ***Li, L₂, ... Lₙ*,** n is the number of phases, ***D*** is the duty cycle, *v_{ac}* is the AC voltage, *fₛ* is the switching frequency of the high frequency switching network 108, and *L₁* is the inductor value of the first phase 126.

To achieve ZVS operation, the available charge ***Q_{L1}*** needs to be equal to the stored charge ***Q_{ZVS1}*.** Setting ***Q_{L1} = Q_{ZVS1}*** results in a switching frequency as shown in equation (4): ${f}_{s} = \frac{\left(1-D\right) \left|{v}_{ac}\right|}{2 {L}_{1} \left(\frac{\left|{i}_{tavg}\right|}{n}+\frac{4 {C}_{oss} {V}_{dc}}{{t}_{dt}}\right)}$ (4) As will be discussed in more detail below, the switching frequency ***fₛ*** can then be used along with the duty cycle ***D,*** to generate switch control signals ***S'₁ₐ*, *S'_{1b}*, *... S'ₙₐ*, *S'_{nb}*** for the high frequency switching network 108. The example illustrated above is based on a time period during which the AC voltage *v_{ac}* is positive. During the inverse period where the AC voltage *v_{ac}* is negative, the switch control signals ***S'₁ₐ*, *S'_{1b}, ... S'ₙₐ, S'_{nb}*** will be inverted.

When multiple phases are employed, such as the three phases illustrated in the exemplary power conversion topology 104, each phase will be spaced equally apart in phase by 360/n degrees, where n is the number of phases.

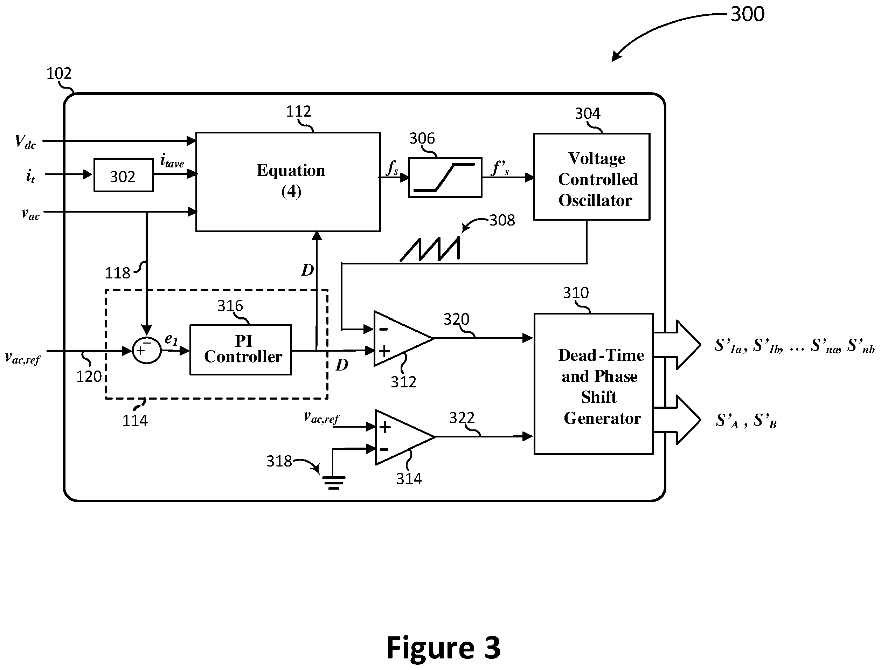

Figure 3 illustrates a block diagram of an exemplary control scheme 300 for operating a bi-directional AC/DC conversion topology incorporating aspects of the disclosed embodiments. The exemplary control scheme 300 is appropriate for use in the controller 102 of the exemplary apparatus 100 described above and illustrated in Figure 1, and is configured to control inverter operation of the exemplary apparatus 100 where power is flowing from the DC voltage ***V_{dc}*** to the AC voltage ***v_{ac}*.**

When operating as an inverter the reference signal 120 is an AC reference voltage ***v_{ac,ref}*** corresponding to a desired AC voltage ***v_{ac}*** to be produced by the apparatus 100 while operating as an inverter, and the controlled signal 118 corresponds to the AC voltage ***v_{ac}*** being produced by the apparatus 100. A voltage control loop 114 compares a reference voltage ***v_{ac,ref}*** to the AC voltage ***v_{ac}*** to determine a first error signal ***e₁.*** A control algorithm 316 is applied to the error signal *e₁* to generate the duty cycle ***D*** required to drive the AC voltage *v_{ac}* toward its desired value. In one embodiment, the control algorithm 316 includes a proportional plus integral control algorithm. Alternatively, any appropriate loop compensation may be advantageously employed,

As described above the switching frequency ***fₛ*** of the high frequency switching network 108 is configured to maintain ZVS operation. ZVS operation is achieved by adjusting 112 the switching frequency ***fₛ*** to create to create an available charge Q_{L1} provided by the inductor ***L₁*** during the dead time ***t_{dt}*** equal to the charge Q_{ZVS1} stored in an output capacitance 122 of any one the high frequency switching devices ***S₁ₐ*, *S_{1b}*,** *...* ***Sₙₐ*, *S_{nb}.*,** as described by equation (4) above. During inverter operation the switching frequency is configured based on the duty cycle **D** generated by the voltage control loop 114, the AC voltage *v_{ac}* produced by the power conversion topology 104, the DC voltage *V_{dc}* input to the power conversion topology 104, and the total current flowing to the AC voltage ***iₜ*.** In the example embodiment illustrated in Figure 3, equation (4) is used to calculate 112 the switching frequency *fₛ* needed to achieve ZVS operation.

In one embodiment, a low pass filter 302 is applied to the total current *iₜ* to produce an average total current ***i_{tavg}*** and the switching frequency is configured based on the average total current ***i_{tavg}*.** In certain embodiments, it may be desirable to use a limiter 306 to limit the switching frequency ***fₛ*** to a maximum switching frequency ***f'ₛ*.** The limited switching frequency ***f'ₛ*** is applied to a voltage-controlled oscillator 304 to produce a frequency reference signal 308. The frequency reference signal 308 may be a triangle signal, a sawtooth waveform or any desired type of frequency reference signal appropriate for generating the desired switch control signals ***S'₁ₐ*, *S'_{1b}*, *... S'ₙₐ*, *S'_{nb}*.**

The frequency reference signal 308 is compared 312 with the duty cycle **D** generated by the voltage control loop 114, and the resulting modulated frequency reference signal 320 is provided to a dead-time and phase shift generator to create the switch control signals ***S'₁ₐ*, *S'_{1b}*, ... *S'ₙₐ*, *S'_{nb}*** used to operate the high frequency switching network 108.

In one embodiment of the exemplary power conversion topology 104 the low frequency switching network 106 operates at the same frequency as the AC voltage *v_{ac}*. Control signals ***S'_{A}*, *S'_{B}*** for the low frequency switching network 106 are generated by comparing 314 the AC reference voltage ***v_{ac,ref}*** with an analog ground 318. The resulting modulated AC voltage signal 322 is fed to a dead-time and phase shift generator to produce control signals ***S'_{A}, S'_{B}*** for the low frequency switching network 106.

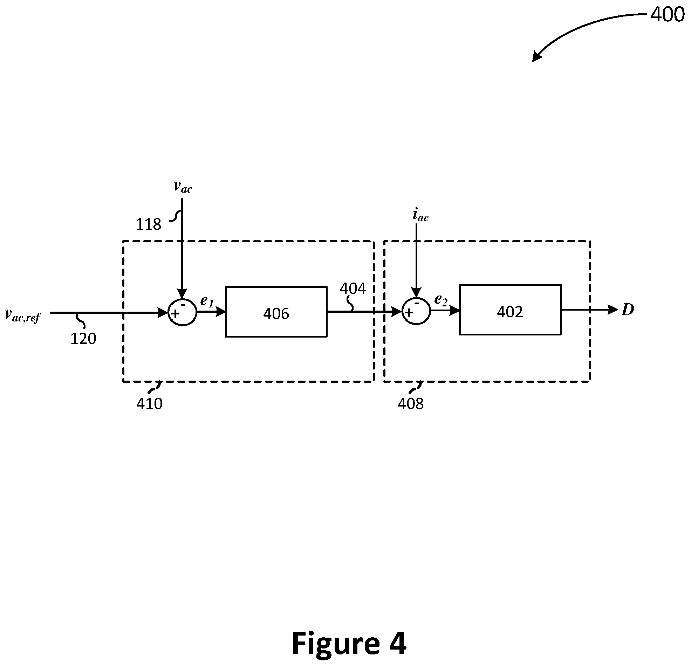

Figure 4 illustrates a block diagram of a dual control loop inverter control scheme 400 incorporating aspects of the disclosed embodiments. In certain inverter applications it may be desirable to control both the AC voltage *v_{ac}* as well as the AC current ***i_{ac}*.** The exemplary dual control scheme 400 incorporates an outer voltage control loop 410 similar to the voltage control loop 114 described above where the controlled signal 118 is the AC voltage ***v_{ac}*** and the reference signal 120 is an AC voltage reference signal ***v_{ac,ref}*.** Subtracting the controlled signal 118 from the reference signal 120 provides a first error signal ***e₁*.**

Applying a voltage loop control algorithm 406 to the first error signal *e₁* generates a second reference signal 404. The inner control loop 408 receives the second control signal 404 and subtracts the ac current ***i_{ac}*** from the second reference signal 404 to produce a second error signal ***e₂*.** Applying a current loop control algorithm 402 to the second error signal *e₂* produces the duty cycle ***D,*** and the duty cycle ***D*** is used to adapt the switching frequency *fₛ* and modulate the switch control signals ***S'₁ₐ*, *S'_{1b}*, ... *S'ₙₐ, S'_{nb}*** as shown in the exemplary control scheme 300.

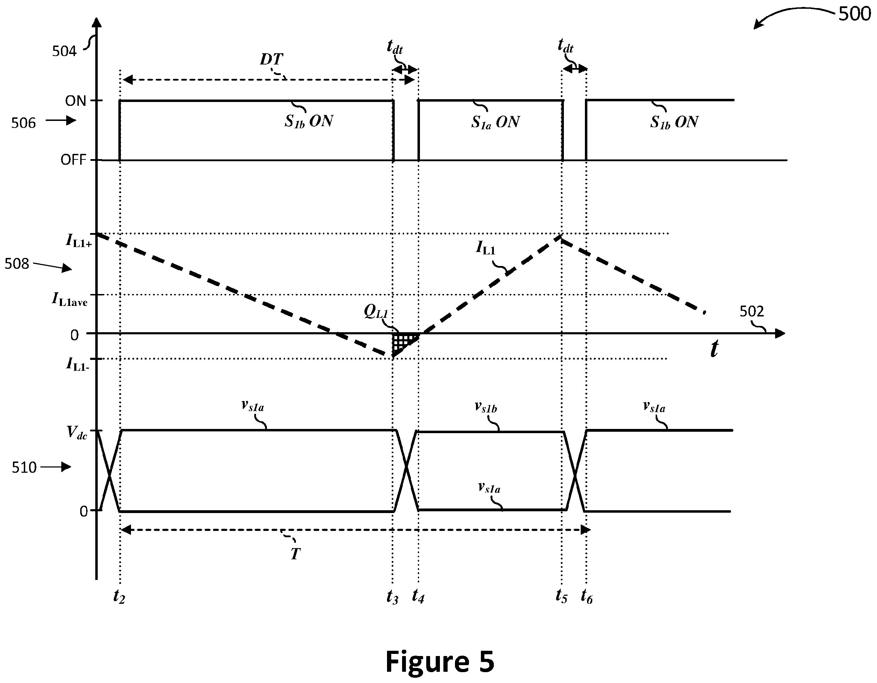

Figure 5 illustrates graphs 500 showing primary waveforms for the first phase 126 of the high frequency switching network 108 while the exemplary apparatus 100 is operating as a rectifier. In the graphs 500 time is depicted along the horizontal axis 502 increasing to the right and signal magnitude is depicted along the vertical axis 504 increasing upwards.

The graphs 500 depict operation of the high frequency switches ***S₁ₐ*, *S_{1b}*** during a positive portion of the AC voltage ***v_{ac}*** cycle. During the positive portion of the AC voltage ***v_{ac}*** cycle switching device ***S_{A}*** of the low frequency switching network 106 is turned off and switching device ***S_{B}*** of the low frequency switching network is turned on, and the reference voltage 120 will be positive.

The primary waveforms for the first phase 126 of the high frequency switching network 108 are periodic and have a period ***T,*** marked with an arrow below graph 510. The period ***T*** is equal to an inverse of the switching frequency ***T =* 1/ *fₛ*.** The duty cycle ***D*** corresponds to an amount of time the first switching device ***S₁ₐ*** remains on during a period and is illustrated by an interval ***DT*** above graph 506. Dead time is an interval during which control signals for both switching devices ***S₁ₐ*** and ***S_{1b}*** are off and is indicated by intervals *t_{dt}* in the graphs 500.

Graph 506 illustrates the control signals for the switching device ***S₁ₐ*** and the switching device ***S_{1b}*.** The first switching device ***S₁ₐ*** is on during the periods indicated by ***S_{1aON}*,** and the second switching device ***S_{1b}*** is on during the period indicated by ***S**_{**1b** ON}*.

Graph 508 illustrates current ***I*_{L1}** through the first inductor ***L₁*.** The maximum inductor current is indicated as ***I*_{L1+},** the minimum inductor current is indicated as ***I*_{L1-} ,** and the average inductor current is indicated as ***I*_{L1ave}.**

Graph 510 illustrates voltage across the first switching device ***vₛ₁ₐ*** and the second switching device ***vₛ₂ₐ*.** The voltages across the two switching devices transition between zero (0) and the DC voltage ***V_{dc}*** during the dead time ***t_{dt}*.** For example, the second switching device ***S_{1b}*** is turned on at time *t₅* and the voltage across the second switching device ***vₛ₂ₐ*** transitions from zero to the DC Voltage ***V_{dc}*** during the following dead time ***t_{dt}*** between time ***t₅*** and ***t₆.***

During rectifier operation, power is flowing from the AC voltage *v_{ac}* to the DC voltage ***V_{dc}*** within the power conversion topology 104. The available charge ***Q_{L1}*** and stored charge ***Q_{ZVS1}*** during rectifier operation are the same as described above with reference to inverter operation and are given by equation (1) and equation (2). The inductor current *I*_{L1-} at the instant before turn on of the switching device ***S₁ₐ*** is shown in equation (5): ${I}_{L 1 -} = \frac{\left|{i}_{tavg}\right|}{n} - \frac{\left(1-D\right) {DV}_{dc}}{2 {L}_{1} {f}_{s}}$ (5) where the symbols in equation (5) are the same as described above with reference to equations (1) through (4).

To achieve ZVS operation, the available charge ***Q_{L1}*** provided by the inductor during the dead time must be equal to the charge ***Q_{ZVS1}*** stored on the output capacitance of the switching device ***S₁ₐ*.** Setting the available charge ***Q_{L1}*** from equation (2) equal to the stored charge ***Q_{ZVS1}*** given by equation (1), substituting equation (5) for the inductor current ***I*_{L1-}**, and solving for the switching frequency yields the switching frequency ***fₛ*** required for ZVS operation during rectifier operation as shown in equation (6): ${f}_{s} = \frac{\left(1-D\right) {DV}_{dc}}{2 {L}_{1} \left(\frac{\left|{i}_{tavg}\right|}{n}+\frac{4 {C}_{oss} {V}_{dc}}{{t}_{dt}}\right)}$ (6)

Note that in contrast with the inverter operation shown in equation (4) above, the switching frequency ***fₛ*** for rectifier operation shown in equation (6) is independent of the AC voltage ***v_{ac}*.**

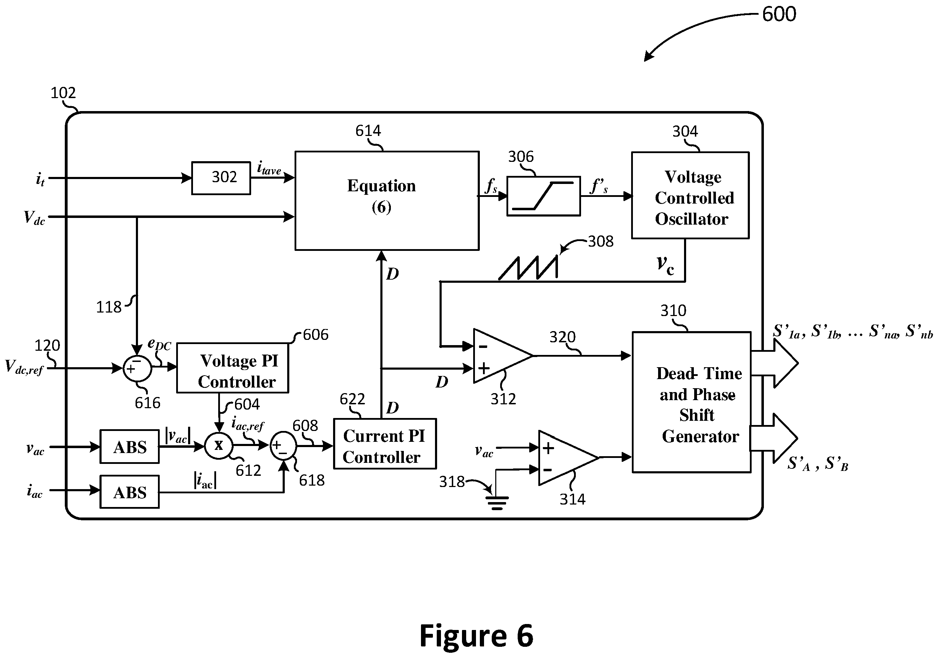

Figure 6 illustrates a block diagram of an exemplary control scheme 600 configured for rectifier operation of a bi-directional AC/DC power conversion topology incorporating aspects of the disclosed embodiments. The exemplary control scheme 600 is appropriate for use in the controller 102 of the exemplary apparatus 100 described above and illustrated in Figure 1, and is configured to control rectifier operation of the exemplary apparatus 100 where power is flowing from the AC voltage *v_{ac}* to the DC voltage ***V_{dc}*.** It should be noted that certain elements of the exemplary control scheme 600 are similar to corresponding elements in the exemplary control scheme 300 described above and with reference to Figure 3 where like references indicate like elements.

The exemplary control scheme 600 employs a dual control loop structure with an outer voltage control loop 616 and an inner current control loop 618. During rectifier operation, the controlled signal 118 corresponds to the DC voltage ***V_{dc}*,** and the reference signal 120 is a desired DC voltage ***V_{dc,ref}*.** The outer voltage control loop subtracts the DC voltage ***V_{dc}*** from the reference signal ***V_{dc,ref}*.** to determine a DC voltage error signal *e_{DC}.* A voltage loop control algorithm 606 is applied to the voltage error signal ***e_{DC}*** to produce the voltage control signal 604. In the illustrated embodiment the voltage loop control algorithm 606 includes a proportional plus integral control algorithm, however any appropriate loop compensation may be advantageously employed. The voltage control signal 604 is then multiplied 612 by an absolute value of the AC voltage | ***v_{ac}*** | to generate a current reference signal ***i_{ac,ref}*.**

The current control loop subtracts an absolute value of the AC current | ***i_{ac}*|** from the current reference signal ***i_{ac,ref}*.** to determine a current error signal 608. Applying a current loop control algorithm 622 to the current error signal 608 generates the duty cycle to be used to calculate the switching frequency ***fₛ*** and to generate the modulated frequency reference signal 320. The switching frequency ***fₛ*** for rectifier operation is generated by applying the relationship of equation (6) to the average total current ***i_{tavg}*,** the DC voltage ***V_{dc}*,** and the duty cycle ***D.*** Any appropriate loop compensation may be advantageously employed for the current loop control algorithm 622, such as a proportional plus integral control algorithm.

The control schemes described above, including control schemes 300, 400, and 600, may be implemented using any appropriate hardware, software, or combination thereof and may include both analog and digital circuitry as desired. For example, the controller 102 may be implemented using a microcontroller (MCU) or other computing or processing device, or the controller 102 may be implemented based on any appropriate combination of digital and/or analog circuitry as desired.

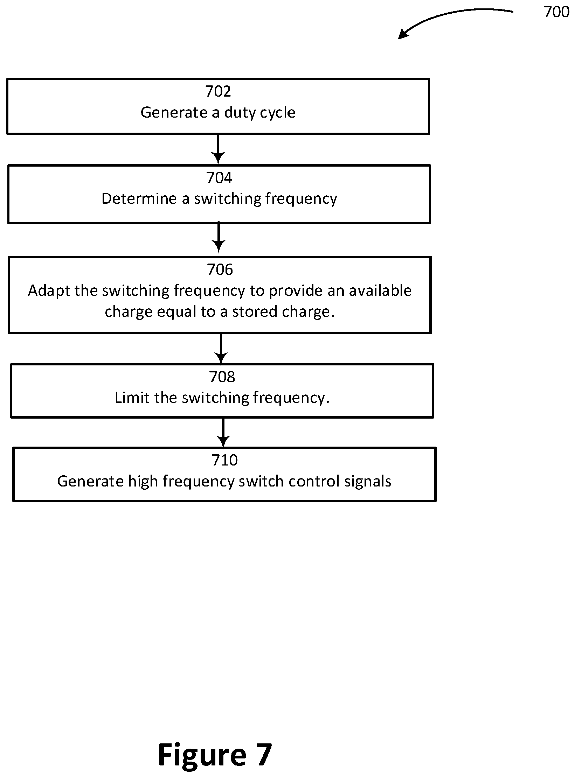

Figure 7 illustrates a flow chart of an exemplary method 700 for controlling a bi-directional AC/DC power conversion topology, such as the exemplary power conversion topology 104 described above and with reference to Figure 1. The exemplary method 700 of the disclosed embodiments is directed to a method for controlling bi-directional power flow through, and ensuring ZVS operation of high frequency switching devices incorporated within, a bi-directional AC/DC power conversion topology. Included in the bi-directional AC/DC power conversion topology are a low frequency switching network, a high frequency switching network, and one or more inductors, wherein the high frequency switching network comprises a plurality of high frequency switching devices, and the power conversion topology is configured to transfer power between a DC voltage and an AC voltage. The exemplary method 700 is appropriate for use in the controller 102 of the exemplary apparatus 100 described above and with reference to Figure 1.

The method 700 begins by generating 702 a duty cycle based on a reference signal and a controlled signal. In one example, the power conversion topology may be operating as an inverter and the duty cycle is generated based on a reference signal corresponding to a desired AC voltage and controlled signal corresponding to an AC voltage produced by the power conversion topology. Alternatively, when the power conversion topology is operating as a rectifier, the reference signal may correspond to a desired DC voltage and the controlled signal may be the DC voltage produced by the power conversion topology. The duty cycle is generated by applying a control algorithm to an error signal determined by subtracting the controlled signal from the reference signal.

A switching frequency is determined 704 based on a total current **(*iₜ*)*,*** such as the total current ***iₜ*** flowing through the one or more inductors ***L₁, L₂*, *... Lₙ*** as described above, the duty cycle ***D,*** and one or more of the DC voltage ***V_{dc}*** and the AC voltage *v_{ac}*. When operating as an inverter both the DC voltage ***V_{dc}*** and the AC voltage ***v_{ac}*** are used in conjunction with equation (4) to determine the switching frequency. Alternatively, when operating as a rectifier the DC voltage is used in conjunction with equation (6) to determine the switching frequency.

In the exemplary method 700, the switching frequency is configured to provide an available charge ***Q_{L1}*** produced by current through an inductor during the dead time equal to the charge ***Q_{ZVS1}*** stored in the output capacitance of a high frequency switching device, such as one of the high frequency switching devices incorporated in the high frequency switching network 108 described above. Ensuring an available charge equal to the stored charge promotes ZVS operation of the high frequency switching network 108.

In certain embodiments it is beneficial to limit 708 the switching frequency to a pre-determined maximum value. This is useful for example to avoid exceeding design limits of the high frequency switching devices selected for a particular power converter implementation.

The resulting switching frequency is then used along with the duty cycle D to generate switch control signals configured to operate the high frequency switching devices in the high frequency switching network.

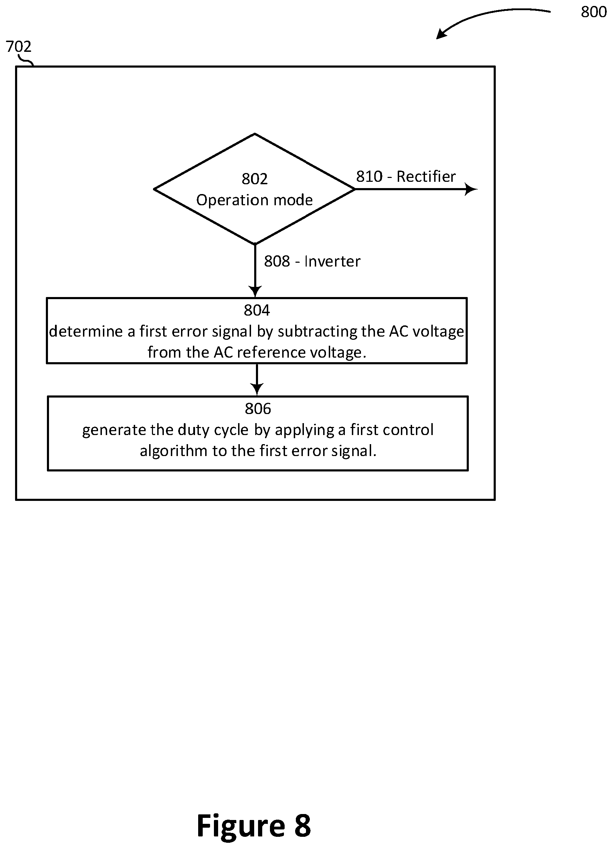

Figure 8 illustrates a flow chart of an exemplary method for generating a duty cycle ***D*** incorporating aspects of the disclosed embodiments. The exemplary method 800 is appropriate for determining 702 the duty cycle in the exemplary method 700 described above when the bi-directional AC/DC power conversion topology is operating as an inverter.

In the illustrated embodiment the exemplary method 800 determines 802 whether the power conversion topology is operating as an inverter 808 or as a rectifier 810. When the power converter is operating as an inverter 808 the method 800 determines 804 a first error signal by subtracting the AC voltage from the AC reference voltage. During inverter operation, the AC voltage is the output of the power conversion topology and the AC reference voltage corresponds to a desired AC output voltage.

A first control algorithm is applied 806 to the first error signal to generate the duty cycle **D.** The first control algorithm may be any appropriate type of control loop compensation or algorithm, such as a proportional plus integral control algorithm.

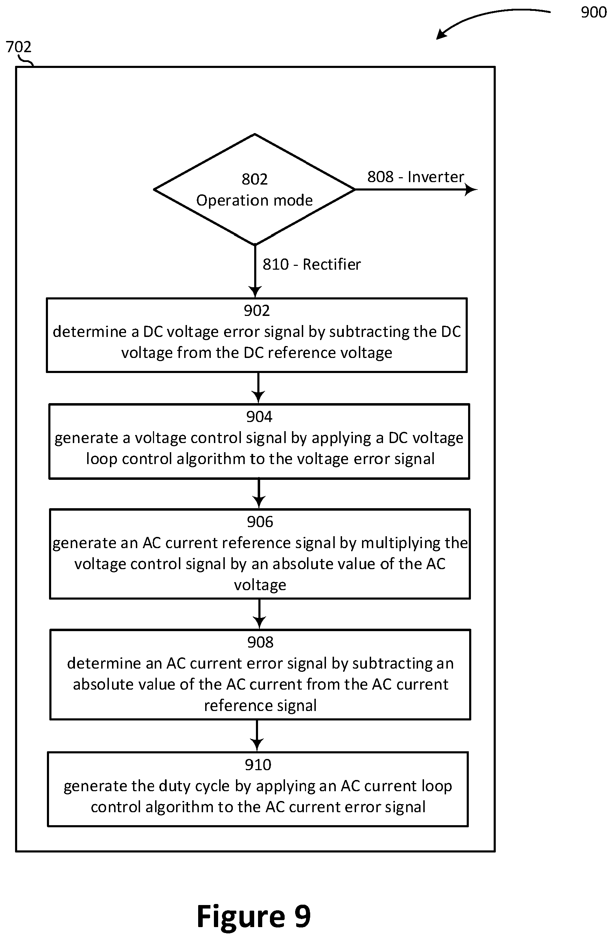

Figure 9 illustrates a flow chart of an exemplary method 900 for generating a duty cycle **D** incorporating aspects of the disclosed embodiments. The exemplary method 900 is appropriate for determining 702 the duty cycle in the exemplary method 700 of Figure 7 described above when the bi-directional AC/DC power conversion topology is operating as rectifier. In the example of Figure 9, the exemplary method 900 may be used as a continuation of the exemplary method 800 when it is determined 802 that the bi-directional power conversion topology is operating as a rectifier 810.

As illustrated in Figure 9, in one embodiment, a DC voltage error signal is determined 902 by subtracting the DC voltage, which is the output of the power conversion topology when operating as a rectifier, from a DC reference voltage. The DC reference voltage corresponds to the desired DC voltage to be produced by the power conversion topology.

A voltage control signal is generated 904 by applying a DC voltage loop control algorithm to the voltage error signal. Any desired type of control loop compensation may be advantageously employed, such as a proportional plus integral control algorithm or other appropriate type of control algorithm. An AC current reference signal is then determined 908 by multiplying the voltage control signal by an absolute value of the AC voltage being output by the power conversion topology.

The duty cycle is generated 910 by applying a current loop control algorithm to the AC current error signal. Similar to the other control algorithms described herein, any appropriate type of loop compensation may be advantageously employed for the current loop control algorithm, such as a proportional plus integral control algorithm or other control algorithm as desired.

When compared with prior art solutions, the control schemes and methods disclosed herein require less sensory equipment to achieve ZVS operation while maintaining minimum RMS current. Less sensory equipment translates to fewer components thereby improving cost and power density. The wide-range ZVS operation of the high frequency switches provided by the improved control schemes and methods result in lower switching losses thereby allowing higher switching frequencies which often translates to higher power densities. The bi-directional power flow provided by the apparatus 100 provides the opportunity to use the same hardware for a wide range of applications such as inverter applications rectifier applications and applications requiring bi-directional power flow.

Thus, while there have been shown, described and pointed out, fundamental novel features of the invention as applied to the exemplary embodiments thereof, it will be understood that various omissions, substitutions and changes in the form and details of devices and methods illustrated, and in their operation, may be made by those skilled in the art without departing from the scope of the presently disclosed invention. Further, it is expressly intended that all combinations of those elements, which perform substantially the same function in substantially the same way to achieve the same results, are within the scope of the invention. Moreover, it should be recognized that structures and/or elements shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. An apparatus (100) comprising:
a bi-directional AC/DC power conversion topology (104) comprising a low frequency switching network (106), a high frequency switching network (108), and one or more inductors **(*L₁, L₂, ... Lₙ*);**
wherein the low frequency switching network (106) is coupled in parallel with a DC voltage **(*V_{dc}*)** and includes two switching devices **(*S_{A}, S_{B}*)** coupled in series between a positive DC bus (128) and a negative DC bus (130), and forms a central node (132);
wherein the high frequency switching network (108) comprises one or more pairs of high frequency switching devices **(*S₁ₐ, S_{1b}, ... Sₙₐ, S_{nb}*),** and the power conversion topology (104) is configured to transfer power between a DC voltage **(*V_{dc}*)** and an AC voltage **(*v_{ac}*),** wherein each pair of switching devices is coupled in series between a positive DC bus (128) and a negative DC bus (130) and forms a central node, wherein the number of inductors is equal to the number of central nodes of the high frequency switching network (108) and wherein each of the inductors **(*L₁, L₂, ... Lₙ*)** is respectively coupled between a different central node and the AC voltage **(*v_{ac}*);** and
a controller (102) coupled to the power conversion topology (104) and configured to receive the DC voltage **(*V_{dc}*)*,*** the AC voltage **(*v_{ac}*)*,*** and a total current **(*iₜ*)** flowing through the one or more inductors **(*L₁, L₂, ... Lₙ*)*,*** and to produce high frequency switch control signals **(*S'₁ₐ, S'_{1b}, ... S'ₙₐ*, *S'_{nb}*)** configured to operate the high frequency switching devices **(*S₁ₐ, S_{1b}, ... Sₙₐ*, *S_{nb}*);**
wherein the controller (102) is configured to:
generate a duty cycle (***D***) based on a reference signal (120) and a controlled signal (118);
determine a switching frequency **(*fₛ*)** based on the total current **(*iₜ*)*,*** the duty cycle ***(D),*** and one or more of the DC voltage **(*V_{dc}*)** and the AC voltage **(*v_{ac}*);**
wherein when the apparatus is operating as an inverter, the switching frequency is determined according to: ${f}_{s} = \frac{\left(1-D\right) \left|{v}_{ac}\right|}{2 {L}_{1} \left(\frac{\left|{i}_{tavg}\right|}{n}+\frac{4 {C}_{oss} {V}_{dc}}{{t}_{dt}}\right)} ;$
wherein when the apparatus is operating as a rectifier, the switching frequency is determined according to: ${f}_{s} = \frac{\left(1-D\right) {DV}_{dc}}{2 {L}_{1} \left(\frac{\left|{i}_{tavg}\right|}{n}+\frac{4 {C}_{oss} {V}_{dc}}{{t}_{dt}}\right)} ;$ wherein *fₛ* is the switching frequency, D is the duty cycle, *v_{ac}* is the AC voltage, ***V_{dc}*** is the DC voltage, L1 is the inductance of an inductor of the one or more inductors **(*L₁, L₂, ... Lₙ*),** i_{tavg} is the average total current through all the inductors **(*L₁, L₂, ... Lₙ*)*,* n** is the number of inductors, Cₒₛₛ is the output capacitance of a switching device **(*S₁ₐ*)** of a pair of high frequency switching devices **(*S₁ₐ, S_{1b}*),** and *t*_{dt} is a dead time, the dead time being an interval during which both switching devices of the pair of high frequency switching devices **(*S₁ₐ*, *S_{1b}*)** are turned off; and
generate 116 the high frequency switch control signals **(*S'₁ₐ*, *S'_{1b}*, *... S'ₙₐ*, *S'_{nb}*)** based on the switching frequency **(*fₛ*)** and the duty cycle ***(D);***
wherein the switching frequency **(*fₛ*)** is adjusted to create an available charge (Q_{L1}) provided by an inductor **(*L₁*)** of the one or more inductors during a dead time **(*t_{dt}*)** equal to a stored charge (Q_{ZVS1}) in an output capacitance (122) of the high frequency switching devices **(*S₁ₐ*, *S_{1b}*, ... *Sₙₐ*, *S_{nb}*)*.***

2. The apparatus (100) of claim 1 wherein, when the apparatus (100) is operating as a rectifier, the switching frequency **(*fₛ*)** is determined based on the DC voltage **(*V_{dc}*)*,*** and when the apparatus (100) is operating as an inverter, the switching frequency **(*fₛ*)** is determined based on the DC voltage **(*V_{dc}*)** and the AC voltage **(*v_{ac}*)*.***

3. The apparatus (100) of any one of the preceding claims wherein the switching frequency **(*fₛ*)** is limited to a predetermined maximum frequency **(*f_{s,max}*)*.***

4. The apparatus (100) of any one of the preceding claims wherein the power conversion topology (104) comprises one or more phases (126).

5. The apparatus (100) of any one of the preceding claims wherein the controller (102) is configured to determine an average current **(*i_{tavg}*)** by applying a low pass filter (302) to the total current **(*iₜ*)*,*** and determine the switching frequency **(*fₛ*)** based on the average current **(*i_{tavg}*)*.***

6. The apparatus (100) of any one of the preceding claims wherein, when the apparatus (100) is operating as an inverter, the reference signal (120) comprises an AC reference voltage **(*v_{ac,ref}*)*,*** the controlled signal comprises the AC voltage **(*v_{ac}*)*,*** and the controller (102) is configured to:
determine a first error signal **(*e₁*)** by subtracting the AC voltage **(*v_{ac}*)** from the AC reference voltage **(*v_{ac,ref}*);** and
generate the duty cycle ***(D)*** by applying a first control algorithm (316) to the first error signal **(*e₁*)*.***

7. The apparatus (100) of any one of the preceding claims wherein the first control algorithm (316) comprises a proportional plus integral (PI) control algorithm.

8. The apparatus (100) of any one of claims 1 through 5 wherein, when the apparatus (100) is operating as an inverter, the reference signal (120) comprises an AC reference current **(*i_{ac,ref}*),** the controlled signal comprises an AC current **(*i_{ac}*)** corresponding to the AC voltage **(*v_{ac}*),** and the controller (102) is configured to:
determine the first error signal **(*e₁*)** by subtracting the AC current **(*i_{ac}*)** from the AC reference current **(*i_{ac,ref}*);** and
generate the duty cycle ***(D)*** by applying the first control algorithm (316) to the first error signal **(*e₁*)*.***

9. The apparatus (100) of any one of claims 1 through 5 wherein, when the apparatus (100) is operating as an inverter, the reference signal (120) comprises the AC reference voltage ***(v_{ac,ref}*),** the controlled signal comprises the AC voltage **(*v_{ac}*),** and the controller (102) is configured to:
determine the first error signal **(*e₁*)** by subtracting the AC voltage **(*v_{ac}*)** from the AC reference voltage **(*v_{ac,ref}*)*;***
generate a second reference signal (404) by applying a voltage loop control algorithm (406) to the first error signal **(*e₁*);**
determine a second error signal **(*e₂*)** by subtracting the AC current **(*i_{ac}*)** from the first error signal **(*e₁*);**
and
generate the duty cycle **(*D*)** by applying a current loop control algorithm (402) to the second error signal **(*e₂*)*.***

10. The apparatus (100) of any one of claims 1 through 5 wherein, when the apparatus (100) is operating as a rectifier, the reference signal (120) comprises a DC reference voltage **(*V_{dc,ref}*),** the controlled signal comprises the DC voltage **(*V_{dc}*),** and the controller (102) is configured to:
determine a DC voltage error signal **(*e_{DC}*)** by subtracting the DC voltage **(*V_{dc}*)** from the DC reference voltage **(*V_{dc,ref})*;**
generate a voltage control signal (604) by applying a DC voltage loop control algorithm (606) to the voltage error signal **(*e_{DC}*);**
generate an AC current reference signal **(*i_{ac,ref}*)** by multiplying the voltage control signal (604) by an absolute value of the AC voltage **(|*v_{ac}*|);**
determine an AC current error signal (608) by subtracting an absolute value of the AC current **(|*i_{ac}* |)** from the AC current reference signal **(*i_{ac,ref}*);** and
generate the duty cycle **(*D*)** by applying an AC current loop control algorithm (610) to the AC current error signal (608).

11. A method (700) for operating a bi-directional AC/DC power conversion topology according to claim 1, the method (700) comprising:
generating (702) a duty cycle based on a reference signal and a controlled signal;
determining (704) a switching frequency based on a total current **(*iₜ*)** flowing through the one or more inductors ***(L₁, L*₂*, ... Lₙ*)*,*** the duty cycle ***(D),*** and one of the DC voltage **(*V_{dc}*)** and the AC voltage **(*v_{ac}*);**
wherein when the apparatus is operating as an inverter, the switching frequency is determined according to: ${f}_{s} = \frac{\left(1-D\right) \left|{v}_{ac}\right|}{2 {L}_{1} \left(\frac{\left|{i}_{tavg}\right|}{n}+\frac{4 {C}_{oss} {V}_{dc}}{{t}_{dt}}\right)} ;$
wherein when the apparatus is operating as a rectifier, the switching frequency is determined according to: ${f}_{s} = \frac{\left(1-D\right) {DV}_{dc}}{2 {L}_{1} \left(\frac{\left|{i}_{tavg}\right|}{n}+\frac{4 {C}_{oss} {V}_{dc}}{{t}_{dt}}\right)} ;$ wherein *fₛ* is the switching frequency, D is the duty cycle, ***v_{ac}*** is the AC voltage, ***V_{dc}*** is the DC voltage, L1 is the inductance of an inductor of the one or more inductors **(*L₁, L₂, ... Lₙ*),** i_{tavg} is the average total current through all the inductors **(*L₁, L₂, ... Lₙ*),** n is the number of inductors, Cₒₛₛ is the output capacitance of a switching device **(*S₁ₐ*)** of a pair of high frequency switching devices **(*S₁ₐ*, *S_{1b}*),** and *t*_{dt} is a dead time, the dead time being an interval during which both switching devices of the pair of high frequency switching devices **(*S₁ₐ, S_{1b}*)** are turned off; and
generating (710) high frequency switch control signals based on the switching frequency and the duty cycle;
wherein determining the switching frequency comprises adjusting (706) the switching frequency to create an available charge provided by an inductor of the one or more inductors during a dead time equal to the stored charge in an output capacitance of the high frequency switching devices.

12. The method (700) of claim 11 wherein, when the power conversion topology is operating as an inverter (808), generating the duty cycle (702) comprises:
determining (802) a first error signal by subtracting the AC voltage from an AC reference voltage; and
generating (804) the duty cycle by applying a first control algorithm to the first error signal.

13. The method (700) of claim 11 wherein, when the power conversion topology is operating as a rectifier (810), generating the duty cycle (702) comprises:
determining (902) a DC voltage error signal by subtracting the DC voltage from the DC reference voltage;
generating (904) a voltage control signal by applying a DC voltage loop control algorithm to the voltage error signal;
generating (906) an AC current reference signal by multiplying the voltage control signal by an absolute value of the AC voltage;
determining (908) an AC current error signal by subtracting an absolute value of the AC current from the AC current reference signal; and
generating (910) the duty cycle by applying an AC current loop control algorithm to the AC current error signal.

## Patentansprüche

1. Vorrichtung (100), umfassend:
eine bidirektionale AC/DC-Leistungsumwandlungstopologie (104), umfassend ein Niederfrequenz-Schaltnetzwerk (106), ein Hochfrequenz-Schaltnetzwerk (108) und einen oder mehrere Induktoren (*L₁*, *L₂*, ... *Lₙ*);
wobei das Niederfrequenz-Schaltnetzwerk (106) mit einer Gleichspannung (*V_{dc}*) parallel geschaltet ist und zwei Schalteinrichtungen (*S_{A}*, *S_{B}*) beinhaltet, die zwischen einem positiven DC-Bus (128) und einem negativen DC-Bus (130) in Reihe geschaltet sind, und einen zentralen Knoten (132) ausbildet;
wobei das Hochfrequenz-Schaltnetzwerk (108) ein oder mehrere Paare von Hochfrequenz-Schalteinrichtungen (*S₁ₐ*, *S_{1b}*, ... *Sₙₐ*, *S_{nb}*) umfasst, und die Leistungsumwandlungstopologie (104) dazu konfiguriert ist, eine Leistung zwischen einer Gleichspannung (*V_{dc}*) und einer Wechselspannung (*v_{ac}*) zu übertragen, wobei jedes Paar von Schalteinrichtungen zwischen einen positiven DC-Bus (128) und einen negativen DC-Bus (130) in Reihe geschaltet ist und einen zentralen Knoten ausbildet, wobei die Anzahl von Induktoren gleich der Anzahl von zentralen Knoten des Hochfrequenz-Schaltnetzwerks (108) ist und wobei jeder der Induktoren (*L₁*, *L₂*, ... *Lₙ*) jeweils zwischen einen anderen zentralen Knoten und die Wechselspannung (*v_{ac}*) geschaltet ist; und
eine Steuerung (102), die mit der Leistungsumwandlungstopologie (104) gekoppelt und dazu konfiguriert ist, die Gleichspannung (*V_{dc}*), die Wechselspannung (*v_{ac}*) und einen Gesamtstrom (*iₜ*) aufzunehmen, der durch den einen oder die mehreren Induktoren (*L₁*, *L₂*, ... *Lₙ*) fließt, und Hochfrequenz-Schaltsteuersignale (*S'₁ₐ*, *S'_{1b}*, ... *S'ₙₐ*, *S'_{nb}*) zu erzeugen, die dazu konfiguriert sind, die Hochfrequenz-Schalteinrichtungen (*S₁ₐ*, *S_{1b}*, ... *Sₙₐ*, *S_{nb}*) zu betreiben;
wobei die Steuerung (102) dazu konfiguriert ist:
einen Arbeitszyklus (D) basierend auf einem Referenzsignal (120) und einem gesteuerten Signal (118) zu generieren;
eine Schaltfrequenz (*fₛ*) basierend auf dem Gesamtstrom (it), dem Arbeitszyklus (D) und einer oder mehreren der Gleichspannung (*V_{dc}*) und der Wechselspannung (*v_{ac}*) zu bestimmen;
wobei, wenn die Vorrichtung als Wechselrichter betrieben wird, die Schaltfrequenz gemäß Folgendem bestimmt wird: ${f}_{s} = \frac{\left(1-D\right) \left|{v}_{ac}\right|}{2 {L}_{1} \left(\frac{\left|{i}_{tavg}\right|}{n}+\frac{4 {C}_{oss} {V}_{dc}}{{t}_{dt}}\right)} ;$
wobei, wenn die Vorrichtung als Gleichrichter betrieben wird, die Schaltfrequenz gemäß Folgendem bestimmt wird: ${f}_{s} = \frac{\left(1-D\right) {DV}_{dc}}{2 {L}_{1} \left(\left(\frac{\left|{i}_{tavg}\right.}{n}+\frac{4 {C}_{oss} {V}_{dc}}{{t}_{dt}}\right)\right.} ;$
wobei *fₛ* die Schaltfrequenz ist, D der Arbeitszyklus ist, *v_{ac}* die Wechselspannung ist, *V_{dc}* die Gleichspannung ist, L1 die Induktivität eines Induktors des einen oder der mehreren Induktoren (*L₁, L₂,* ... *Lₙ*) ist, i_{tavg} der durchschnittliche Gesamtstrom durch alle Induktoren (*L₁, L₂,* ... *Lₙ*) ist, n die Anzahl von Induktoren ist, Cₒₛₛ die Ausgangskapazität einer Schalteinrichtung (*S₁ₐ*) eines Paares von Hochfrequenz-Schalteinrichtungen (*S₁ₐ*, *S_{1b}*) ist und *t*_{dt} eine Totzeit ist, wobei die Totzeit ein Intervall ist, währenddessen beide Schalteinrichtungen des Paares von Hochfrequenz-Schalteinrichtungen (*S₁ₐ*, *S_{1b}*) ausgeschaltet sind; und
116 die Hochfrequenz-Schaltsteuersignale (*S'₁ₐ*, *S'_{1b}*, ... *S'ₙₐ*, *S'_{nb}*) basierend auf der Schaltfrequenz (*fₛ*) und dem Arbeitszyklus (D) zu generieren;
wobei die Schaltfrequenz (*fₛ*) eingestellt wird, um eine verfügbare Ladung (Q_{L1}) zu erzeugen, die durch einen Induktor (*L₁*) des einen oder der mehreren Induktoren während einer Totzeit (*t_{dt}*) bereitgestellt wird, die gleich einer gespeicherten Ladung (Q_{ZVS1}) in einer Ausgangskapazität (122) der Hochfrequenz-Schalteinrichtungen (*S₁ₐ, S_{1b},* ... *Sₙₐ*, *S_{nb}*) ist.

2. Vorrichtung (100) nach Anspruch 1, wobei, wenn die Vorrichtung (100) als Gleichrichter betrieben wird, die Schaltfrequenz (*fₛ*) basierend auf der Gleichspannung (*V_{dc}*) bestimmt wird und, wenn die Vorrichtung (100) als Wechselrichter betrieben wird, wobei die Schaltfrequenz (*fₛ*) basierend auf der Gleichspannung (*V_{dc}*) und der Wechselspannung (*v_{ac}*) bestimmt wird.

3. Vorrichtung (100) nach einem der vorhergehenden Ansprüche, wobei die Schaltfrequenz (*fₛ*) auf eine vorbestimmte Maximalfrequenz (*f_{s,max}*) begrenzt ist.

4. Vorrichtung (100) nach einem der vorhergehenden Ansprüche, wobei die Leistungsumwandlungstopologie (104) eine oder mehrere Phasen (126) umfasst.

5. Vorrichtung (100) nach einem der vorhergehenden Ansprüche, wobei die Steuerung (102) dazu konfiguriert ist, einen Durchschnittsstrom (*i_{tavg}*) durch Anwenden eines Tiefpassfilters (302) auf den Gesamtstrom (*iₜ*) zu bestimmen und die Schaltfrequenz (*fₛ*) basierend auf dem Durchschnittsstrom (*i_{tavg}*) zu bestimmen.

6. Vorrichtung (100) nach einem der vorhergehenden Ansprüche, wobei, wenn die Vorrichtung (100) als Wechselrichter betrieben wird, das Referenzsignal (120) eine Referenzwechselspannung (*v_{ac,ref}*) umfasst, das gesteuerte Signal die Wechselspannung (*v_{ac}*) umfasst und die Steuerung (102) dazu konfiguriert ist:
ein erstes Fehlersignal (*e₁*) durch Subtrahieren der Wechselspannung (*v_{ac}*) von der Referenzwechselspannung (*v_{ac,ref}*) zu bestimmen; und
den Arbeitszyklus (*D*) durch Anwenden eines ersten Steueralgorithmus (316) auf das erste Fehlersignal (*e₁*) zu generieren.

7. Vorrichtung (100) nach einem der vorhergehenden Ansprüche, wobei der erste Steueralgorithmus (316) einen Proportional-Integral-Steueralgorithmus (PI-Steueralgorithmus) umfasst.

8. Vorrichtung (100) nach einem der Ansprüche 1 bis 5, wobei, wenn die Vorrichtung (100) als Wechselrichter betrieben wird, das Referenzsignal (120) einen Referenzwechselstrom (*i_{ac,ref}*) umfasst, das gesteuerte Signal einen Wechselstrom (*i_{ac}*) entsprechend der Wechselspannung (*v_{ac}*) umfasst und die Steuerung (102) dazu konfiguriert ist:
das erste Fehlersignal (*e₁*) durch Subtrahieren des Wechselstroms (*i_{ac}*) von dem Referenzwechselstrom (*i_{ac,ref}*) zu bestimmen; und
den Arbeitszyklus (*D*) durch Anwenden des ersten Steueralgorithmus (316) auf das erste Fehlersignal (*e₁*) zu generieren.

9. Vorrichtung (100) nach einem der Ansprüche 1 bis 5, wobei, wenn die Vorrichtung (100) als Wechselrichter betrieben wird, das Referenzsignal (120) die Referenzwechselspannung (*v_{ac,ref}*) umfasst, das gesteuerte Signal die Wechselspannung (*v_{ac}*) umfasst und die Steuerung (102) dazu konfiguriert ist:
das erste Fehlersignal (*e₁*) durch Subtrahieren der Wechselspannung (*v_{ac}*) von der Referenzwechselspannung (*v_{ac,ref}*) zu bestimmen;
ein zweites Referenzsignal (404) durch Anwenden eines Algorithmus (406) zur Spannungsschleifensteuerung auf das erste Fehlersignal (*e₁*) zu generieren;
ein zweites Fehlersignal (*e₂*) durch Subtrahieren des Wechselstroms (*i_{ac}*) von dem ersten Fehlersignal (*e₁*) zu bestimmen; und
den Arbeitszyklus (*D*) durch Anwenden eines Algorithmus (402) zur Stromschleifensteuerung auf das zweite Fehlersignal (*e₂*) zu generieren.

10. Vorrichtung (100) nach einem der Ansprüche 1 bis 5, wobei, wenn die Vorrichtung (100) als Gleichrichter betrieben wird, das Referenzsignal (120) eine Referenzgleichspannung (*V_{dc,ref}*) umfasst, das gesteuerte Signal die Gleichspannung (*V_{dc}*) umfasst und die Steuerung (102) dazu konfiguriert ist:
das Gleichspannungsfehlersignal (*e_{DC}*) durch Subtrahieren der Gleichspannung (*V_{dc}*) von der Referenzgleichspannung (*V_{dc,ref}*) zu bestimmen;
ein Spannungssteuersignal (604) durch Anwenden eines Algorithmus (606) zur Gleichspannungsschleifensteuerung auf das Spannungsfehlersignal (*e_{DC}*) zu generieren;
ein Wechselstrom-Referenzsignal (*i_{ac,ref}*) durch Multiplizieren des Spannungssteuersignals (604) mit einem Absolutwert der Wechselspannung (|*v_{ac}*|) zu generieren;
ein Wechselstrom-Fehlersignal (608) durch Subtrahieren eines Absolutwerts des Wechselstroms (|*i_{ac}*|) von dem Wechselstrom-Referenzsignal (*i_{ac,ref}*) zu bestimmen; und
den Arbeitszyklus (*D*) durch Anwenden eines Algorithmus (610) zur Wechselstromschleifensteuerung auf das Wechselstrom-Fehlersignal (608) zu generieren.

11. Verfahren (700) zum Betreiben einer bidirektionalen AC/DC-Leistungsumwandlungstopologie nach Anspruch 1, wobei das Verfahren (700) Folgendes umfasst:
Generieren (702) eines Arbeitszyklus basierend auf einem Referenzsignal und einem gesteuerten Signal;
Bestimmen (704) einer Schaltfrequenz basierend auf einem Gesamtstrom (*iₜ*), der durch die eine oder die mehreren Induktoren (*L₁*, *L₂*, ... *Lₙ*) fließt, dem Arbeitszyklus (*D*) und einer von der Gleichspannung (*V_{dc}*) oder der Wechselspannung (*v_{ac}*);
wobei, wenn die Vorrichtung als Wechselrichter betrieben wird, die Schaltfrequenz gemäß Folgendem bestimmt wird: ${f}_{s} = \frac{\left(1-D\right) \left|{v}_{ac}\right|}{{2 L}_{1} \left(\frac{\left|{i}_{tavg}\right|}{n}+\frac{4 {C}_{oss} {V}_{dc}}{{t}_{dt}}\right)} ;$
wobei, wenn die Vorrichtung als Gleichrichter betrieben wird, die Schaltfrequenz gemäß Folgendem bestimmt wird: ${f}_{s} = \frac{\left(1-D\right) {DV}_{dc}}{2 {L}_{1} \left(\left(\frac{\left|{i}_{tavg}\right.}{n}+\frac{4 {C}_{oss} {V}_{dc}}{{t}_{dt}}\right)\right.} ;$
wobei *fₛ* die Schaltfrequenz ist, D der Arbeitszyklus ist, *v_{ac}* die Wechselspannung ist, *V_{dc}* die Gleichspannung ist, L1 die Induktivität eines Induktors des einen oder der mehreren Induktoren (*L₁, L₂,* ... *Lₙ*) ist, i_{tavg} der durchschnittliche Gesamtstrom durch alle Induktoren (*L₁, L₂,* ... *Lₙ*) ist, n die Anzahl von Induktoren ist, Cₒₛₛ die Ausgangskapazität einer Schalteinrichtung (*S₁ₐ*) eines Paares von Hochfrequenz-Schalteinrichtungen (*S₁ₐ*, *S_{1b}*) ist und *t*_{dt} eine Totzeit ist, wobei die Totzeit ein Intervall ist, währenddessen beide Schalteinrichtungen des Paares von Hochfrequenz-Schalteinrichtungen (*S₁ₐ, S_{1b}*) ausgeschaltet sind; und
Generieren (710) von Hochfrequenz-Schaltsteuersignalen basierend auf der Schaltfrequenz und dem Arbeitszyklus;
wobei das Bestimmen der Schaltfrequenz das Einstellen (706) der Schaltfrequenz umfasst, um eine verfügbare Ladung zu erzeugen, die durch einen Induktor des einen oder der mehreren Induktoren während einer Totzeit bereitgestellt wird, die gleich der gespeicherten Ladung in einer Ausgangskapazität der Hochfrequenz-Schalteinrichtungen ist.

12. Verfahren (700) nach Anspruch 11, wobei, wenn die Leistungsumwandlungstopologie als Wechselrichter (808) betrieben wird, das Generieren des Arbeitszyklus (702) Folgendes umfasst:
Bestimmen (802) eines ersten Fehlersignals durch Subtrahieren der Wechselspannung von einer Referenzwechselspannung; und
Generieren (804) des Arbeitszyklus durch Anwenden eines ersten Steueralgorithmus auf das erste Fehlersignal.

13. Verfahren (700) nach Anspruch 11, wobei, wenn die Leistungsumwandlungstopologie als Gleichrichter (810) betrieben wird, das Generieren des Arbeitszyklus (702) Folgendes umfasst:
Bestimmen (902) eines Gleichspannungsfehlersignals durch Subtrahieren der Gleichspannung von der Referenzgleichspannung;
Generieren (904) eines Spannungssteuersignals durch Anwenden eines Algorithmus zur Gleichspannungsschleifensteuerung auf das Spannungsfehlersignal;
Generieren (906) eines Wechselstrom-Referenzsignals durch Multiplizieren des Spannungssteuersignals mit einem Absolutwert der Wechselspannung;
Bestimmen (908) eines Wechselstrom-Fehlersignals durch Subtrahieren eines Absolutwerts des Wechselstroms von dem Wechselstrom-Referenzsignal; und
Generieren (910) des Arbeitszyklus durch Anwenden eines Algorithmus zur Wechselstromschleifensteuerung auf das Wechselstrom-Fehlersignal.

## Revendications

1. Appareil (100) comprenant :
une topologie de conversion de puissance CA/CC bidirectionnelle (104) comprenant un réseau de commutation basse fréquence (106), un réseau de commutation haute fréquence (108) et un ou plusieurs inducteurs (*L₁*, *L₂*, ... *Lₙ*) ;
dans lequel le réseau de commutation basse fréquence (106) est couplé en parallèle avec une tension CC (*V_{dc}*) et comporte deux dispositifs de commutation (*S_{A}*, *S_{B}*) couplés en série entre un bus CC positif (128) et un bus CC négatif (130), et forme un nœud central (132) ;
dans lequel le réseau de commutation haute fréquence (108) comprend une ou plusieurs paires de dispositifs de commutation haute fréquence (*S₁ₐ*, *S_{1b}*, ... *Sₙₐ*, *S_{nb}*), et la topologie de conversion de puissance (104) est configurée pour transférer de la puissance entre une tension CC (*V_{dc}*) et une tension CA (*v_{ac}*),
dans lequel chaque paire de dispositifs de commutation est couplée en série entre un bus CC positif (128) et un bus CC négatif (130) et forme un nœud central, dans lequel le nombre d'inducteurs est égal au nombre de nœuds centraux du réseau de commutation haute fréquence (108) et dans lequel chacun des inducteurs (*L₁*, *L₂*, ... *Lₙ*) est respectivement couplé entre un nœud central différent et la tension CA (*v_{ac}*) ; et
un dispositif de commande (102) couplé à la topologie de conversion de puissance (104) et configuré pour recevoir la tension CC (*V_{dc}*), la tension CA (*v_{ac}*) et un courant total (*iₜ*) circulant à travers les un ou plusieurs inducteurs (*L₁*, *L₂*, ... *Lₙ*) et pour produire des signaux de commande de commutation haute fréquence (*S'₁ₐ*, *S'_{1b}*, ... *S'ₙₐ*, *S'_{nb}*) configurés pour faire fonctionner les dispositifs de commutation haute fréquence (*S₁ₐ*, *S_{1b}*, ... *Sₙₐ*, *S_{nb}*) ;
dans lequel le dispositif de commande (102) est configuré pour :
générer un rapport cyclique (D) sur la base d'un signal de référence (120) et d'un signal commandé (118) ;
déterminer une fréquence de commutation (*fₛ*) sur la base du courant total (*iₜ*), du rapport cyclique (*D*) et d'une ou de plusieurs de la tension CC(*V_{dc}*) et de la tension CA (*v_{ac}*) *;*
dans lequel, lorsque l'appareil fonctionne en tant qu'onduleur, la fréquence de commutation est déterminée selon : ${f}_{s} = \frac{\left(1-D\right) \left|{v}_{ac}\right|}{2 {L}_{1} \left(\frac{\left|{i}_{tavg}\right|}{n}+\frac{4 {C}_{oss} {V}_{dc}}{{t}_{dt}}\right)} ;$
dans lequel, lorsque l'appareil fonctionne en tant que redresseur, la fréquence de commutation est déterminée selon : ${f}_{s} = \frac{\left(1-D\right) {DV}_{dc}}{2 {L}_{1} \left(\left(\frac{\left|{i}_{tavg}\right.}{n}+\frac{4 {C}_{oss} {V}_{dc}}{{t}_{dt}}\right)\right.} ;$
dans lequel *fₛ* est la fréquence de commutation, D est le rapport cyclique, *v_{ac}* est la tension CA, *V_{dc}* est la tension CC, L1 est l'inductance d'un inducteur des un ou plusieurs inducteurs (*L₁, L₂,* ... *Lₙ*), i_{tavg} est le courant total moyen traversant tous les inducteurs (*L₁, L₂,* ... *Lₙ*), n est le nombre d'inducteurs, Cₒₛₛ est la capacité de sortie d'un dispositif de commutation (*S₁ₐ*) d'une paire de dispositifs de commutation haute fréquence (*S₁ₐ*, *S_{1b}*), et *t*_{dt} est un temps mort, le temps mort étant un intervalle pendant lequel les deux dispositifs de commutation de la paire de dispositifs de commutation haute fréquence (*S₁ₐ*, *S_{1b}*) sont désactivés ; et
générer 116 les signaux de commande de commutation haute fréquence (*S'₁ₐ*, *S'_{1b}*, ... *S'ₙₐ*, *S'_{nb}* sur la base de la fréquence de commutation (*fₛ*) et du rapport cyclique *(D) ;*
dans lequel la fréquence de commutation (*fₛ*) est réglée pour créer une charge disponible (Q_{L1}) fournie par un inducteur (*L₁*) des un ou plusieurs inducteurs pendant un temps mort (*t_{dt}*) égale à une charge stockée (Q_{ZVS1}) dans une capacité de sortie (122) des dispositifs de commutation haute fréquence (*S₁ₐ*, *S_{1b}*, ... *Sₙₐ*, *S_{nb}*)*.*

2. Appareil (100) selon la revendication 1, dans lequel, lorsque l'appareil (100) fonctionne en tant que redresseur, la fréquence de commutation (*fₛ*) est déterminée sur la base de la tension CC (*V_{dc}*), et lorsque l'appareil (100) fonctionne en tant qu'onduleur, la fréquence de commutation (*fₛ*) est déterminée sur la base de la tension CC (*V_{dc}*) et de la tension CA (*v_{ac}*).

3. Appareil (100) selon l'une quelconque des revendications précédentes, dans lequel la fréquence de commutation (*fₛ*) est limitée à une fréquence maximale prédéterminée (*f_{s,max}*).

4. Appareil (100) selon l'une quelconque des revendications précédentes, dans lequel la topologie de conversion de puissance (104) comprend une ou plusieurs phases (126).

5. Appareil (100) selon l'une quelconque des revendications précédentes, dans lequel le dispositif de commande (102) est configuré pour déterminer un courant moyen (*i_{tavg}*) en appliquant un filtre passe-bas (302) au courant total (*iₜ*) et déterminer la fréquence de commutation (*fₛ*) sur la base du courant moyen (*i_{tavg}*).

6. Appareil (100) selon l'une quelconque des revendications précédentes, dans lequel, lorsque l'appareil (100) fonctionne en tant qu'onduleur, le signal de référence (120) comprend une tension de référence CA (*v_{ac,ref}*), le signal commandé comprend la tension CA (*v_{ac}*) et le dispositif de commande (102) est configuré pour :
déterminer un premier signal d'erreur (*e₁*) en soustrayant la tension CA (*v_{ac}*) de la tension de référence CA (*v_{ac,ref}*) ; et
générer le rapport cyclique (*D*) en appliquant un premier algorithme de commande (316) au premier signal d'erreur (*e₁*).

7. Appareil (100) selon l'une quelconque des revendications précédentes, dans lequel le premier algorithme de commande (316) comprend un algorithme de commande proportionnel plus intégral (PI).

8. Appareil (100) selon l'une quelconque des revendications 1 à 5, dans lequel, lorsque l'appareil (100) fonctionne en tant qu'onduleur, le signal de référence (120) comprend un courant de référence CA (*i_{ac,ref}*), le signal commandé comprend un courant CA (*i_{ac}*) correspondant à la tension CA (*v_{ac}*), et le dispositif de commande (102) est configuré pour :
déterminer le premier signal d'erreur (*e₁*) en soustrayant le courant CA (*i_{ac}*) du courant de référence CA (*i_{ac,ref}*) ; et
générer le rapport cyclique (*D*) en appliquant le premier algorithme de commande (316) au premier signal d'erreur (*e₁*).

9. Appareil (100) selon l'une quelconque des revendications 1 à 5, dans lequel, lorsque l'appareil (100) fonctionne en tant qu'onduleur, le signal de référence (120) comprend la tension de référence CA (*v_{ac,ref}*), le signal commandé comprend la tension CA (*v_{ac}*) et le dispositif de commande (102) est configuré pour :
déterminer le premier signal d'erreur (*e₁*) en soustrayant la tension CA (*v_{ac}*) de la tension de référence CA (*v_{ac,ref}*) ;
générer un second signal de référence (404) en appliquant un algorithme de commande de boucle de tension (406) au premier signal d'erreur (*e₁*) ;
déterminer un second signal d'erreur (*e₂*) en soustrayant le courant CA (*i_{ac}*) du premier signal d'erreur (*e₁*) ; et
générer le rapport cyclique (*D*) en appliquant un algorithme de commande de boucle de courant (402) au second signal d'erreur (*e₂*).

10. Appareil (100) selon l'une quelconque des revendications 1 à 5, dans lequel, lorsque l'appareil (100) fonctionne en tant que redresseur, le signal de référence (120) comprend une tension de référence CC (*V_{dc,ref}*), le signal commandé comprend la tension CC (*V_{dc}*) et le dispositif de commande (102) est configuré pour :
déterminer un signal d'erreur de tension CC (*e_{DC}*) en soustrayant la tension CC (*V_{dc}*) de la tension de référence CC (*V_{dc,ref}*) ;
générer un signal de commande de tension (604) en appliquant un algorithme de commande de boucle de tension CC (606) au signal d'erreur de tension (*e_{DC}*) ;
générer un signal de référence de courant CA (*i_{ac,ref}*) en multipliant le signal de commande de tension (604) par une valeur absolue de la tension CA (|*v_{ac}*|) ;
déterminer un signal d'erreur de courant CA (608) en soustrayant une valeur absolue du courant CA (|*i_{ac}*|) du signal de référence de courant CA (*i_{ac,ref}*) ; et
générer le rapport cyclique (*D*) en appliquant un algorithme de commande de boucle de courant CA (610) au signal d'erreur de courant CA (608).

11. Procédé (700) de fonctionnement d'une topologie de conversion de puissance CA/CC bidirectionnelle selon la revendication 1, le procédé (700) comprenant :
la génération (702) d'un rapport cyclique sur la base d'un signal de référence et d'un signal commandé ;
la détermination (704) d'une fréquence de commutation sur la base d'un courant total (*iₜ*) circulant à travers les un ou plusieurs inducteurs (*L₁*, *L₂*, ... *Lₙ*), du rapport cyclique (*D*) et de l'une de la tension CC (*V_{dc}*) et de la tension CA (*v_{ac}*) ;
dans lequel, lorsque l'appareil fonctionne en tant qu'onduleur, la fréquence de commutation est déterminée selon : ${f}_{s} = \frac{\left(1-D\right) \left|{v}_{ac}\right|}{{2 L}_{1} \left(\frac{\left|{i}_{tavg}\right|}{n}+\frac{4 {C}_{oss} {V}_{dc}}{{t}_{dt}}\right)} ;$
dans lequel, lorsque l'appareil fonctionne en tant que redresseur, la fréquence de commutation est déterminée selon : ${f}_{s} = \frac{\left(1-D\right) {DV}_{dc}}{2 {L}_{1} \left(\left(\frac{\left|{i}_{tavg}\right.}{n}+\frac{4 {C}_{oss} {V}_{dc}}{{t}_{dt}}\right)\right.} ;$
dans lequel *fₛ* est la fréquence de commutation, D est le rapport cyclique, *v_{ac}* est la tension CA, *V_{dc}* est la tension CC, L1 est l'inductance d'un inducteur des un ou plusieurs inducteurs (*L₁*, *L₂*, ... *Lₙ*), i_{tavg} est le courant total moyen traversant tous les inducteurs (*L₁*, *L₂*, ... *Lₙ*), n est le nombre d'inducteurs, Cₒₛₛ est la capacité de sortie d'un dispositif de commutation (*S₁ₐ*) d'une paire de dispositifs de commutation haute fréquence (*S₁ₐ*, *S_{1b}*), et *t*_{dt} est un temps mort, le temps mort étant un intervalle pendant lequel les deux dispositifs de commutation de la paire de dispositifs de commutation haute fréquence (*S₁ₐ*, *S_{1b}*) sont désactivés ; et
la génération (710) de signaux de commande de commutation haute fréquence sur la base de la fréquence de commutation et du rapport cyclique ;
dans lequel la détermination de la fréquence de commutation comprend le réglage (706) de la fréquence de commutation pour créer une charge disponible fournie par un inducteur des un ou plusieurs inducteurs pendant un temps mort égale à la charge stockée dans une capacité de sortie des dispositifs de commutation haute fréquence.

12. Procédé (700) selon la revendication 11, dans lequel, lorsque la topologie de conversion de puissance fonctionne en tant qu'onduleur (808), la génération du rapport cyclique (702) comprend :
la détermination (802) d'un premier signal d'erreur en soustrayant la tension CA d'une tension de référence CA ; et
la génération (804) du rapport cyclique en appliquant un premier algorithme de commande au premier signal d'erreur.

13. Procédé (700) selon la revendication 11, dans lequel, lorsque la topologie de conversion de puissance fonctionne en tant que redresseur (810), la génération du rapport cyclique (702) comprend :
la détermination (902) d'un signal d'erreur de tension CC en soustrayant la tension CC de la tension de référence CC ;
la génération (904) d'un signal de commande de tension en appliquant un algorithme de commande de boucle de tension CC au signal d'erreur de tension ;
la génération (906) d'un signal de référence de courant CA en multipliant le signal de commande de tension par une valeur absolue de la tension CA ;
la détermination (908) d'un signal d'erreur de courant CA en soustrayant une valeur absolue du courant CA du signal de référence de courant CA ; et
la génération (910) du rapport cyclique en appliquant un algorithme de commande de boucle de courant CA au signal d'erreur de courant CA.
